# EUROPEAN PATENT APPLICATION

(11) **EP 4 636 943 A1**
(43) Date of publication of application: **22.10.2025**
(21) Application number: 23921888.6
(22) Date of filing: 16.02.2023
(51) Int. Cl.: H01M 50/627, H01M 50/636, H01M 50/543

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: SU, Huasheng, Ningde, Fujian 352100 (CN)
(74) Representative: Frick, Robert
(86) International application number: PCT/CN2023/076583
(87) International publication number: WO 2024/168734

(57) **Abstract**

Embodiments of this application provide a battery cell, a battery, and an electric device. The battery cell is provided with an electrolyte injection hole, where a center of an orthographic projection of the battery cell along a first direction overlaps with a center of an orthographic projection of the electrolyte injection hole along the first direction, and the first direction is a direction of a central axis of the electrolyte injection hole. The battery cell, the battery, and the electric device provided in the embodiments of this application can improve the processing efficiency of the battery cell.

## Description

### TECHNICAL FIELD

This application relates to the technical field of batteries, and in particular, to a battery cell, a battery, and an electric device.

### BACKGROUND

Energy conservation and emission reduction are key to the sustainable development of the automotive industry. In this context, electric vehicles, with their advantages in energy conservation and environmental protection, have become an important part of the sustainable development of the automotive industry. For electric vehicles, battery technology is an important factor in connection with their development. In the rapid development of battery technologies, how the processing and production efficiency of batteries is improved is an urgent technical problem that needs to be solved in battery technologies.

### SUMMARY

Embodiments of this application provide a battery cell, a battery, and an electric device to improve the processing efficiency of the battery cell.

According to a first aspect, a battery cell is provided, where the battery cell is provided with an electrolyte injection hole, a center of an orthographic projection of the battery cell along a first direction overlaps with a center of an orthographic projection of the electrolyte injection hole along the first direction, and the first direction is a direction of a central axis of the electrolyte injection hole.

Therefore, in processing the battery cell in the embodiments of this application, even if rotation occurs and the rotation angle is uncertain, when an electrolyte is injected into the battery cell through the electrolyte injection hole, the position of the electrolyte injection hole of each battery cell can still be ensured to be relatively fixed, eliminating the need to align by rotating the battery cell. This can improve electrolyte injection efficiency, enhance the processing efficiency of the battery cell, reduce the proportion of electrolyte contamination, and further improve the processing yield of the battery cell.

In some embodiments, the electrolyte injection hole is provided on a first wall of the battery cell, and the electrolyte injection hole is located at a center of the first wall, that is, the electrolyte injection hole may be a through hole penetrating the center of the first wall to facilitate processing.

In some embodiments, the battery cell further includes: an electrode terminal provided on the first wall, where the electrolyte injection hole penetrates the electrode terminal, and a central axis of the electrode terminal coincides with the central axis of the electrolyte injection hole. Configuring the electrolyte injection hole as a through hole penetrating the electrode terminal can reduce the space occupied by the electrode terminal and the electrolyte injection hole on the first wall, resulting in a simple structure that is easy to implement. The central axis of the electrode terminal coinciding with the central axis of the electrolyte injection hole ensures that a thickness of a sidewall of the electrode terminal used to form the electrolyte injection hole is relatively uniform, thereby ensuring the structural strength of the electrode terminal.

In some embodiments, the electrode terminal is provided with a recess, and the electrolyte injection hole penetrates a bottom wall of the recess, where the recess can reduce the weight of the electrode terminal.

In some embodiments, the battery cell further includes: a connecting member configured to be electrically connected to both the electrode terminal and a tab of an electrode assembly, where the connecting member is provided with a first through hole, and an orthographic projection of the first through hole along the first direction at least partially overlaps with the orthographic projection of the electrolyte injection hole along the first direction.

The electrolyte can sequentially pass through the electrolyte injection hole of the electrode terminal and the first through hole provided in the connecting member to enter the interior of the battery cell. Furthermore, when the orthographic projection of the first through hole along the first direction at least partially overlaps with the orthographic projection of the electrolyte injection hole along the first direction, at least a portion of the electrolyte passing through the electrolyte injection hole can directly and quickly enter the interior of the battery cell through the first through hole, avoiding excessive electrolyte flowing to other positions of the connecting member. This is more conducive to the electrolyte quickly passing through the electrolyte injection hole and the first through hole, thereby increasing the electrolyte injection speed.

In some embodiments, the orthographic projection of the first through hole along the first direction, the orthographic projection of the electrolyte injection hole along the first direction, and an orthographic projection of the electrode assembly along the first direction at least partially overlap. In this way, the electrolyte entering the battery cell through the electrolyte injection hole and the first through hole can directly and quickly come into contact with the electrode assembly, increasing the infiltration speed of the electrolyte and improving electrolyte injection efficiency.

In some embodiments, a central axis of the first through hole overlaps with the central axis of the electrolyte injection hole. In this way, no offset occurs between the central axis of the electrolyte injection hole and the central axis of the first through hole along the first direction, allowing the electrolyte to pass through the electrolyte injection hole and the first through hole more quickly into the interior of the battery cell, thereby avoiding excessive electrolyte flowing to other positions, and further increasing the electrolyte injection speed.

In some embodiments, the connecting member includes a first surface and a second surface opposite to each other, the first surface is electrically connected to the electrode terminal, the second surface is electrically connected to the tab, and the first through hole penetrates both the first surface and the second surface. This facilitates processing and can reduce the internal space of the battery cell occupied by the connecting member, thereby increasing the energy density of the battery cell.

In some embodiments, the connecting member includes a first portion, a second portion, and a third portion stacked along the first direction, where the first portion and the second portion are connected by a first bent portion, the second portion and the third portion are connected by a second bent portion, the first portion is electrically connected to the electrode terminal, and the third portion is electrically connected to the tab.

Configuring the connecting member as a foldable structure allows the connecting member to have a larger surface area when unfolded, and allows the connecting member to occupy a smaller area when folded. In this way, during the assembly of the battery cell, the first portion can first be electrically connected to the electrode terminal provided on a cover plate while the connecting member is unfolded, then the third portion can be electrically connected to the tab, and finally, the connecting member can be folded to complete the assembly. Since the surface area of the connecting member is larger when unfolded, when the third portion is electrically connected to the tab, the first portion is farther from the third portion, so that the electrode terminal and the cover plate are not likely affected. Additionally, folding the connecting member can reduce the space occupied by the connecting member inside the battery cell.

In some embodiments, the first bent portion and the second bent portion are respectively located at opposite ends of the second portion. In other words, for the unfolded connecting member, the first portion, the first bent portion, the second portion, the second bent portion, and the third portion are sequentially distributed along a length direction of the connecting member, which can increase the length of the connecting member. When the third portion is electrically connected to the tab, the distance between the first portion and the third portion is relatively large. For example, at least the second portion exists between the first portion and the third portion, making the electrode terminal and the cover plate farther apart and less likely to be affected. Additionally, folding the connecting member can also reduce the space occupied by the connecting member inside the battery cell.

In some embodiments, the first through hole penetrates the first portion and the second portion. The first through hole penetrating the first portion and the second portion reduces the obstruction of the first portion and the second portion to the electrolyte, accelerating the speed of the electrolyte flowing into the interior of the battery cell and infiltrating the electrode assembly.

In some embodiments, the first portion includes a first hole, the second portion includes a second hole, the first through hole includes the first hole and the second hole, and an aperture of the first hole and an aperture of the second hole are both larger than an aperture of the electrolyte injection hole to reduce the obstruction of the first hole and the second hole to the electrolyte flowing through the electrolyte injection hole, accelerating the speed of the electrolyte flowing into the interior of the battery cell and infiltrating the electrode assembly.

In some embodiments, the first through hole also penetrates the third portion. When the first through hole penetrates the first portion, the second portion, and the third portion, the electrolyte flowing into the battery cell through the electrolyte injection hole can quickly reach the electrode assembly through the first through hole, thereby increasing the infiltration speed and improving infiltration efficiency.

In some embodiments, the third portion includes a third hole, the first through hole includes the third hole, and an aperture of the third hole is larger than an aperture of the electrolyte injection hole. After passing through the electrolyte injection hole, the electrolyte sequentially passes through the first hole, the second hole, and the third hole. Configuring the aperture of the third hole to be larger can reduce the obstruction of the third hole to the electrolyte, accelerating the speed of the electrolyte flowing into the interior of the battery cell and infiltrating the electrode assembly.

In some embodiments, the battery cell includes: a housing, where the housing is a hollow structure with an opening; and a cover plate configured to cover the opening of the housing. The hollow structure inside the housing can be used to accommodate the electrode assembly, and with the opening of the housing covered by the cover plate, the interior of the battery cell can be isolated from the exterior, avoiding external influence.

In some embodiments, the cover plate is provided with the electrolyte injection hole to facilitate processing.

In some embodiments, a wall at which the electrolyte injection hole is located is circular or rectangular to facilitate processing.

According to a second aspect, a battery is provided, including: the battery cell according to the first aspect.

According to a third aspect, an electric device is provided, including: the battery cell according to the first aspect, where the battery cell is configured to provide electric energy for the electric device.

In some embodiments, the electric device is a vehicle, a ship, or a spacecraft.

### BRIEF DESCRIPTION OF DRAWINGS

FIG. 1 is a schematic structural diagram of a vehicle disclosed in an embodiment of this application;
FIG. 2 is a schematic exploded structural diagram of a battery disclosed in an embodiment of this application;
FIG. 3 is a schematic diagram of a battery cell disclosed in an embodiment of this application;
FIG. 4 is a schematic top view of a wall provided with an electrolyte injection hole of a battery cell disclosed in an embodiment of this application;
FIG. 5 is another schematic top view of a wall provided with an electrolyte injection hole of a battery cell disclosed in an embodiment of this application;
FIG. 6 is a schematic diagram of another battery cell disclosed in an embodiment of this application;
FIG. 7 is a schematic top view of a wall provided with an electrolyte injection hole of another battery cell disclosed in an embodiment of this application;
FIG. 8 is another schematic top view of a wall provided with an electrolyte injection hole of another battery cell disclosed in an embodiment of this application;
FIG. 9 is a schematic partial exploded structural diagram of a battery cell disclosed in an embodiment of this application;
FIG. 10 is a schematic partial cross-sectional view of a battery cell disclosed in an embodiment of this application;
FIG. 11 is a schematic partial cross-sectional view in another direction of a battery cell disclosed in an embodiment of this application;
FIG. 12 is a schematic exploded structural diagram of a cover plate, an electrode terminal, and a connecting member of a battery cell disclosed in an embodiment of this application;
FIG. 13 is a schematic structural diagram of a connecting member disclosed in an embodiment of this application;
FIG. 14 is another schematic structural diagram of a connecting member disclosed in an embodiment of this application; and
FIG. 15 is a schematic partial exploded structural diagram of yet another battery cell disclosed in an embodiment of this application.

In the drawings, the drawings are not drawn to actual scale.

### DESCRIPTION OF EMBODIMENTS

The embodiments of this application are further described in detail below with reference to the accompanying drawings and embodiments. The detailed description and drawings of the following embodiments are used to illustrate the principles of this application by way of example, but are not intended to limit the scope of this application, that is, this application is not limited to the described embodiments.

In the description of this application, it should be noted that, unless otherwise stated, "plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Vertical" is not strictly vertical, but within an allowable range of error. "Parallel" is not strictly parallel, but within an allowable range of error.

The orientation terms appearing in the following description all are directions shown in the figures, and do not limit the specific structure of this application. In the description of this application, it should also be noted that, unless otherwise expressly specified and limited, the terms "mount", "interconnect", and "connect" should be understood in a broad sense. For example, it may be a fixed connection, a detachable connection, or an integral connection; or it may be a direct connection or an indirect connection through an intermediate medium. Persons of ordinary skill in the art can understand the specific meanings of these terms in this application as appropriate to specific situations.

In the embodiments of this application, the same reference signs denote the same components, and for brevity, in different embodiments, detailed descriptions of the same components are not repeated. It should be understood that, as shown in the accompanying drawings, sizes such as thickness, length, and width of various components and sizes such as thickness, length, and width of integrated apparatuses in the embodiments of this application are merely for illustrative purposes and should not constitute any limitations on this application.

In the embodiments of this application, a battery cell may be a secondary battery, and the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in the embodiments of this application.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent a short circuit between the positive electrode and the negative electrode and to allow the active ions to pass through.

In some embodiments, the positive electrode may be a positive electrode plate, and the positive electrode plate may include a positive electrode current collector and a positive electrode active material provided on at least one surface of the positive electrode current collector.

In an example, the positive electrode current collector includes two opposite surfaces in a thickness direction of the positive electrode current collector, and the positive electrode active material is provided on either or both of the two opposite surfaces of the positive electrode current collector.

In an example, the positive electrode current collector may be a metal foil current collector or a composite current collector. For example, as the metal foil, the positive electrode current collector may use silver surface-treated aluminum or stainless steel, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries. These positive electrode active materials may be used alone or in combination of two or more. Examples of lithium-containing phosphates may include, but are not limited to, at least one of lithium iron phosphate (such as LiFePO4 (also abbreviated as LFP)), a composite material of lithium iron phosphate and carbon, lithium manganese phosphate (such as LiMnPO4), a composite material of lithium manganese phosphate and carbon, lithium manganese iron phosphate, or a composite material of lithium manganese iron phosphate and carbon.

In some embodiments, the negative electrode may be a negative electrode plate, and the negative electrode plate may include a negative electrode current collector.

In an example, the negative electrode current collector may be a metal foil current collector or a composite current collector. For example, as the metal foil, the negative electrode current collector may use silver surface-treated aluminum or stainless steel, stainless steel, copper, aluminum, nickel, baked carbon, carbon, nickel, or titanium. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode plate may include a negative electrode current collector and a negative electrode active material provided on at least one surface of the negative electrode current collector.

In an example, the negative electrode current collector has two opposite surfaces in its thickness direction, and the negative electrode active material is provided on either or both of the two opposite surfaces of the negative electrode current collector.

In an example, the negative electrode active material may include a negative electrode active material known in the art for battery cells. In an example, the negative electrode active material may include at least one of the following materials: artificial graphite, natural graphite, soft carbon, hard carbon, silicon-based materials, tin-based materials, and lithium titanate.

In some embodiments, the negative electrode may use a foam metal. The foam metal may be foam nickel, foam copper, foam aluminum, foam alloy, foam carbon, or the like. When the foam metal is used as the negative electrode plate, the surface of the foam metal may not be provided with a negative electrode active material, or may be provided with a negative electrode active material.

In an example, the negative electrode current collector may also be filled or/and deposited with a lithium source material, potassium metal, or sodium metal, where the lithium source material is lithium metal and/or a lithium-rich material.

In some embodiments, a material of the positive electrode current collector may be aluminum, and a material of the negative electrode current collector may be copper.

In some embodiments, the electrode assembly further includes a separator, where the separator is provided between the positive electrode and the negative electrode.

In some embodiments, the separator is a separating film. The separating film is not limited to any particular type in this application, and may be any well-known porous separating film with good chemical stability and mechanical stability.

In an example, major materials of the separating film may be selected from at least one of glass fiber, non-woven fabric, polyethylene, polypropylene, polyvinylidene fluoride, or ceramics.

In some embodiments, the separator is a solid electrolyte. The solid electrolyte is arranged between the positive electrode and the negative electrode, and plays the roles of transporting ions and isolating the positive electrode and the negative electrode.

In some embodiments, the battery cell further includes an electrolyte, where the electrolyte plays a role of conducting ions between the positive electrode and the negative electrode. The type of electrolyte is not specifically limited in this application, and can be selected according to requirements. The electrolyte may be liquid, gel, or solid.

In some embodiments, the electrode assembly is a wound structure. The positive electrode plate and the negative electrode plate are wound into a wound structure.

In some embodiments, the electrode assembly is a laminated structure.

In an example, a plurality of positive electrode plates and a plurality of negative electrode plates may be provided, respectively, where the plurality of positive electrode plates and the plurality of negative electrode plates are alternately stacked.

In an example, a plurality of positive electrode plates may be provided, and the negative electrode plate is folded to form a plurality of stacked folding segments, with one positive electrode plate held between adjacent folding segments.

In an example, both the positive electrode plate and the negative electrode plate are folded to form a plurality of stacked folding segments.

In an example, a plurality of separators may be provided, respectively arranged between any adjacent positive electrode plate or negative electrode plate.

In an example, the separator may be continuously provided, arranged between any adjacent positive electrode plate or negative electrode plate by folding or winding.

In some embodiments, a shape of the electrode assembly may be cylindrical, flat, or prismatic.

In some embodiments, the electrode assembly is provided with tabs, where the tabs can conduct current from the electrode assembly. The tabs include a positive electrode tab and a negative electrode tab.

In some embodiments, the battery cell may include a shell. The shell is configured to encapsulate the electrode assembly, the electrolyte, and other components. The shell may be a steel shell, an aluminum shell, a plastic shell (for example, polypropylene), a composite metal shell (for example, a copper-aluminum composite shell), an aluminum-plastic film, or the like. The shell includes a housing body and a cover plate.

In an example, the battery cell may be a cylindrical battery cell, a prismatic battery cell, a pouch battery cell, or a battery cell of other shapes. The prismatic battery cell includes a square-shell battery cell, a blade-shaped battery cell, or a polygonal prismatic battery, where the polygonal prismatic battery is for example a hexagonal prismatic battery. This application has no particular limitation.

The battery mentioned in the embodiments of this application may include a single physical module that includes one or more battery cells for providing a higher voltage and capacity. When there are a plurality of battery cells, the plurality of battery cells are connected in series, in parallel, or in a mixed connection through a busbar component.

In some embodiments, the battery can be a battery module, and when there are a plurality of battery cells, the plurality of battery cells are arranged and fastened to form a battery module.

In some embodiments, the battery may be a battery pack, where the battery pack includes a box and battery cells, and the battery cells or battery modules are accommodated in the box.

In some embodiments, the box may be used as part of a chassis structure of a vehicle. For example, a part of the box may become at least a part of the chassis of a vehicle, or a part of the box may become at least parts of a cross beam and a longitudinal beam of a vehicle.

An electrolyte injection hole is usually provided on a shell of a battery cell. An electrolyte is injected into the interior of the battery cell through the electrolyte injection hole. To facilitate processing, the electrolyte injection hole is typically provided on one wall of the battery cell together with other components. For example, the electrolyte injection hole is usually located on the same wall as an electrode terminal or a pressure relief mechanism of the battery cell. In this case, to avoid other components and prevent affecting other components, the position of the electrolyte injection hole is significantly restricted. For example, when the electrolyte injection hole and the electrode terminal are provided on the same wall, if one electrode terminal is provided on the wall, the electrode terminal is typically located at a center position. If a plurality of electrode terminals are provided on the wall, the plurality of electrode terminals are typically symmetrically distributed relative to a center of the wall, while the electrolyte injection hole is usually provided at an edge position of the wall to avoid affecting the electrode terminals. Additionally, if the wall where the electrolyte injection hole is located is also provided with a pressure relief mechanism, it is necessary to avoid the region where the pressure relief mechanism is located, so the position of the electrolyte injection hole is highly restricted and is usually provided at a specific position at the edge. In injecting the electrolyte into the battery cell, for example, for a cylindrical battery cell, the position of the electrolyte injection hole of each battery cell is typically located at an edge of a bottom surface of the cylinder. Since the battery cell may rotate during processing, the position of the electrolyte injection hole may not be fixed. As a result, during electrolyte injection, it is necessary to adjust and rotate the battery cell to a specific position before injecting the electrolyte, which severely affects the takt time of the production line. Moreover, if the positioning is inaccurate, it is easy to cause electrolyte contamination, affecting the processing yield of the battery cell.

In view of this, the embodiments of this application provide a battery cell, a battery, and an electric device. The battery cell is provided with an electrolyte injection hole, where a center of an orthographic projection of the battery cell along a first direction overlaps with a center of an orthographic projection of the electrolyte injection hole along the first direction, and the first direction is a direction of a central axis of the electrolyte injection hole. In this way, in processing the battery cell, even if the battery cell rotates and the rotation angle is uncertain, when an electrolyte is injected into the battery cell through the electrolyte injection hole, the position of the electrolyte injection hole of each battery cell can still be ensured to be relatively fixed, eliminating the need to align by rotating the battery cell. This can improve electrolyte injection efficiency, enhance the processing efficiency of the battery cell, reduce the proportion of electrolyte contamination, and further improve the processing yield of the battery cell.

The technical solutions described in the embodiments of this application are applicable to various electric devices using batteries.

The electric device may be a vehicle, a mobile phone, a portable device, a notebook computer, a ship, a spacecraft, an electric toy, an electric tool, or the like. The vehicle may be a fossil fuel vehicle, a natural-gas vehicle, or a new energy vehicle, where the new energy vehicle may be a battery electric vehicle, a hybrid electric vehicle, a range-extended vehicle, or the like. The spacecraft includes an airplane, a rocket, a space shuttle, a spaceship, or the like. The electric toy includes a fixed or mobile electric toy, for example, a game console, an electric car toy, an electric ship toy, an electric airplane toy, or the like. The electric tool includes a metal cutting electric tool, a grinding electric tool, an assembly electric tool, and a railway electric tool, for example, an electric drill, an electric grinder, an electric wrench, an electric screwdriver, an electric hammer, an impact drill, a concrete vibrator, an electric planer, or the like. The embodiments of this application impose no special limitation on the foregoing electric device.

For convenience of description, the following embodiments are described by using an example in which the electric device is a vehicle.

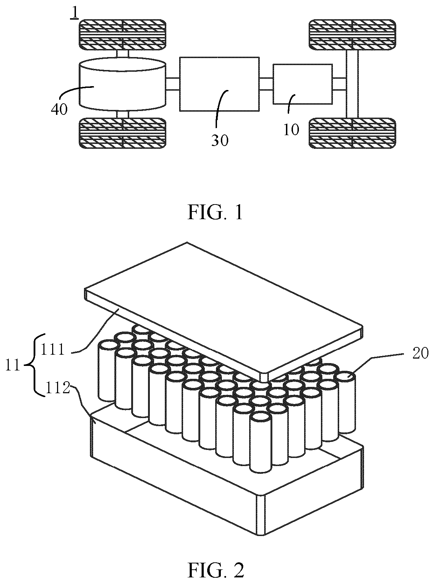

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at a bottom, a front, or a rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

For example, FIG. 2 is a schematic partial structural diagram of a battery 10 according to an embodiment of this application. As shown in FIG. 2, the battery 10 in this embodiment of this application may include a plurality of battery cells 20 to meet different power usage requirements. A shape of the battery cell 20 in this embodiment of this application can be configured according to actual applications. For example, the battery cell 20 may be cylindrical as shown in FIG. 2, or may be a cuboid or other shapes different from those shown in FIG. 2, and the embodiments of this application are not limited thereto.

It should be understood that, as shown in FIG. 2, the battery 10 in this embodiment of this application may further include a box 11, where the box 11 may be configured to accommodate a plurality of battery cells 20. The interior of the box 11 in this embodiment of this application is a hollow structure, and a plurality of battery cells 20 are accommodated within the box 11. The box 11 may include two parts, referred to here as a first box portion 111 and a second box portion 112, where the first box portion 111 and the second box portion 112 are fastened together. Shapes of the first box portion 111 and the second box portion 112 may be determined based on shapes of components accommodated therein, for example, based on a combined shape of the plurality of battery cells 20 accommodated therein, and at least one of the first box portion 111 and the second box portion 112 has an opening. For example, as shown in FIG. 2, only one of the first box portion 111 and the second box portion 112 may be a hollow cuboid with an opening, while the other is plate-shaped to cover the opening. Here, taking the second box portion 112 as a hollow cuboid with an opening and the first box portion 111 as plate-shaped as an example, the first box portion 111 covers the opening of the second box portion 112 to form a box 11 with a closed chamber, where the chamber can be used to accommodate a plurality of battery cells 20. The plurality of battery cells 20, after being combined in parallel, in series, or in a mixed connection, are placed in the box 11 formed by the fastening of the first box portion 111 and the second box portion 112.

For another example, different from that shown in FIG. 2, both the first box portion 111 and the second box portion 112 may be hollow cuboids each with an opening surface, where an opening of the first box portion 111 and an opening of the second box portion 112 are arranged opposite to each other, and the first box portion 111 and the second box portion 112 are fastened to each other to form a box 11 with a closed chamber, where the chamber can be used to accommodate a plurality of battery cells 20.

In some embodiments, the battery 10 may further include a busbar component, where the busbar component may be configured to achieve electrical connection between a plurality of battery cells 20, such as in parallel, in series, or in a mixed connection. Specifically, the busbar component may achieve electrical connection between the battery cells 20 by connecting electrode terminals 214 of the battery cells 20. Alternatively, the busbar component may also achieve electrical connection between the battery cells 20 by connecting other components of the battery cells 20, for example, the busbar component may be electrically connected to a sealing structure or a housing of the battery cell 20, thereby achieving electrical connection between the battery cells 20. Further, the busbar component may be fixed to corresponding components of the battery cell 20 by welding, for example, it may be fixed to the electrode terminal 214, the sealing structure, or the housing by welding, and the embodiments of this application are not limited thereto.

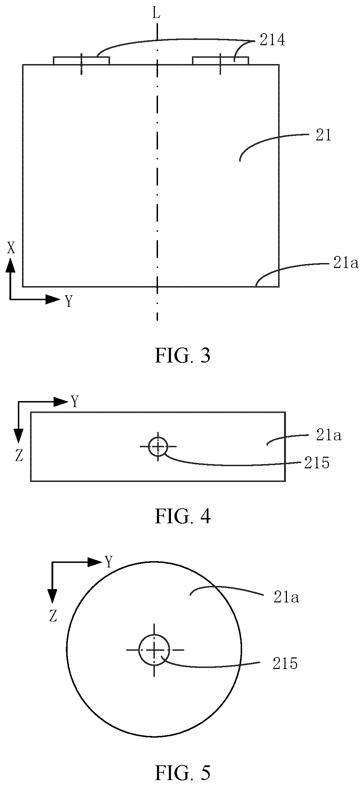

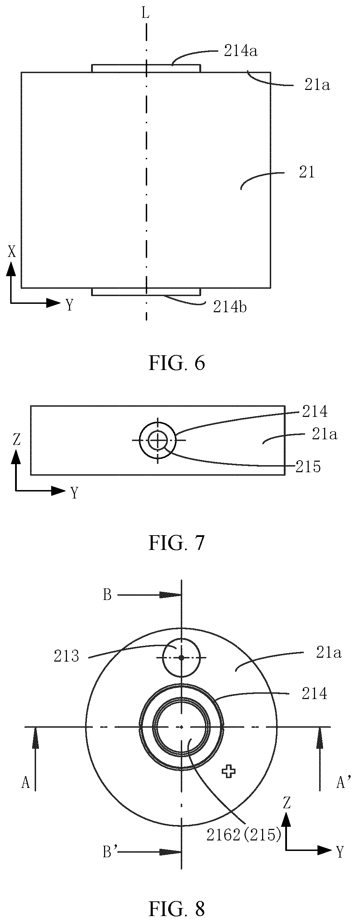

FIG. 3 is a schematic side view of a battery cell 20 according to an embodiment of this application, and FIG. 4 and FIG. 5 are several possible schematic top views of a wall provided with an electrolyte injection hole 215 of a battery cell 20 according to an embodiment of this application. For example, FIG. 4 and FIG. 5 may be two possible schematic diagrams of the wall provided with the electrolyte injection hole 215 of the battery cell 20 shown in FIG. 3. FIG. 6 is a schematic side view of a battery cell 20 according to another embodiment of this application, and FIG. 7 and FIG. 8 are several possible schematic top views of a wall provided with an electrolyte injection hole 215 of a battery cell 20 according to another embodiment of this application. For example, FIG. 7 and FIG. 8 may be two possible schematic diagrams of the wall provided with the electrolyte injection hole 215 of the battery cell 20 shown in FIG. 6.

As shown in FIG. 3 to FIG. 8, the battery cell 20 in this embodiment of this application is provided with an electrolyte injection hole 215, where a center of an orthographic projection of the battery cell 20 along a first direction X overlaps with a center of an orthographic projection of the electrolyte injection hole 215 along the first direction X, and the first direction X is a direction of a central axis L of the electrolyte injection hole 215.

It should be understood that the electrolyte injection hole 215 in this embodiment of this application may be a through hole. For example, taking the electrolyte injection hole 215 located on a first wall 21a of the battery cell 20 as an example, the first wall 21a may be any one wall of the battery cell 20. In this case, the electrolyte injection hole 215 may be a through hole provided on the first wall 21a and penetrating the first wall 21a. Alternatively, the electrolyte injection hole 215 may be provided on any component on the first wall 21a and penetrate the component, and the embodiments of this application are not limited thereto.

The first direction X in this embodiment of this application is the direction of the central axis L of the electrolyte injection hole 215, that is, the first direction X is parallel to the central axis L of the electrolyte injection hole 215. Additionally, as shown in FIG. 3 to FIG. 8, for ease of understanding, the embodiments of this application also define a second direction Y and a third direction Z, where the first direction X, the second direction Y, and the third direction Z are mutually perpendicular.

It should be understood that the battery cell 20 in this embodiment of this application can be flexibly configured according to actual applications, and the battery cell 20 may be of any shape. For example, as shown in FIG. 3 to FIG. 8, the battery cell 20 may be an axisymmetric structure. Alternatively, differently, the battery cell 20 may also be a non-axisymmetric structure. For example, the battery cell 20 may be prismatic to facilitate the assembly of a plurality of battery cells 20. For example, the battery cell 20 may be a right prism or an oblique prism. For another example, if the battery cell 20 is a right prism, as shown in FIG. 4 and FIG. 7, the battery cell 20 may be a cuboid, or as shown in FIG. 5 and FIG. 8, the battery cell 20 is a cylinder. For yet another example, if the battery cell 20 is an oblique prism, the battery cell 20 may include at least one parallelogram wall, or may also include at least one trapezoidal wall, and the embodiments of this application are not limited thereto.

In some embodiments, the central axis L of the electrolyte injection hole 215 is typically perpendicular to the first wall 21a where the electrolyte injection hole 215 is located, that is, the first direction X is perpendicular to the first wall 21a. If the first direction X is perpendicular to the first wall 21a, the orthographic projection of the electrolyte injection hole 215 along the first direction X may be an orthographic projection of the electrolyte injection hole 215 on a surface of the first wall 21a. Correspondingly, the orthographic projection of the battery cell 20 along the first direction X may also be an orthographic projection of the battery cell 20 on a plane where the first wall 21a is located.

In this embodiment of this application, the battery cell 20 is provided with the electrolyte injection hole 215, where the center of the orthographic projection of the battery cell 20 along the first direction X overlaps with the center of an orthographic projection of the electrolyte injection hole 215 along the first direction X, and the first direction X is a direction of the central axis L of the electrolyte injection hole 215. In this way, in processing the battery cell 20, even if the battery cell 20 rotates and the rotation angle is uncertain, when an electrolyte is injected into the battery cell 20 through the electrolyte injection hole 215, the position of the electrolyte injection hole 215 of each battery cell 20 can still be ensured to be relatively fixed, eliminating the need to align by rotating the battery cell 20. This can improve electrolyte injection efficiency, enhance the processing efficiency of the battery cell 20, reduce the proportion of electrolyte contamination, and further improve the processing yield of the battery cell 20.

For ease of description, the embodiments of this application mainly take a right prismatic battery cell 20 as shown in FIG. 3 to FIG. 8 as an example, but the embodiments of this application are not limited thereto.

In some embodiments, the electrolyte injection hole 215 is provided on a first wall 21a of the battery cell 20, and the electrolyte injection hole 215 is located at a center of the first wall 21a. Specifically, as shown in FIG. 3 to FIG. 5, the electrolyte injection hole 215 is provided on the first wall 21a of the battery cell 20, that is, the electrolyte injection hole 215 is a through hole penetrating the first wall 21a to facilitate processing. Additionally, when the battery cell 20 is a polyhedral structure of a specific shape, if the center of the orthographic projection of the battery cell 20 along the first direction X overlaps with the center of the orthographic projection of the electrolyte injection hole 215 along the first direction X, the electrolyte injection hole 215 is located at the center of the first wall 21a. For example, if the battery cell 20 is a cylinder or cuboid as shown in FIG. 3 to FIG. 5, the orthographic projection of the battery cell 20 along the first direction X coincides with the first wall 21a, and the center of the orthographic projection of the battery cell 20 along the first direction X is the center of the first wall 21a, so the electrolyte injection hole 215 is located at the center of the first wall 21a.

In some other embodiments, the electrolyte injection hole 215 may alternatively be provided on other components. For example, as shown in FIG. 6 to FIG. 8, the battery cell 20 further includes: an electrode terminal 214, where the electrode terminal 214 is provided on the first wall 21a, the electrolyte injection hole 215 penetrates the electrode terminal 214, and a central axis of the electrode terminal 214 coincides with the central axis L of the electrolyte injection hole 215. Configuring the electrolyte injection hole 215 as a through hole penetrating the electrode terminal 214 can reduce the space occupied by the electrode terminal 214 and the electrolyte injection hole 215 on the first wall 21a, resulting in a simple structure that is easy to implement. The central axis of the electrode terminal 214 coinciding with the central axis L of the electrolyte injection hole 215 ensures that a thickness of a sidewall of the electrode terminal 214 used to form the electrolyte injection hole 215 is relatively uniform, thereby ensuring the structural strength of the electrode terminal 214.

Additionally, the electrode terminal 214 in this embodiment of this application may be located at the center of the first wall 21a, for example, if the battery cell 20 is a cylinder or cuboid as shown in FIG. 6 to FIG. 8, the orthographic projection of the battery cell 20 along the first direction X coincides with the first wall 21a, and the center of the orthographic projection of the battery cell 20 along the first direction X is the center of the first wall 21a, so when the central axis of the electrode terminal 214 coincides with the central axis L of the electrolyte injection hole 215, the electrode terminal 214 is located at the center of the first wall 21a.

It should be understood that the electrode terminal 214 in this embodiment of this application is configured to be electrically connected to an electrode assembly 22 inside the battery cell 20 to output electric energy of the battery cell 20. As shown in FIG. 3 to FIG. 8, the battery cell 20 may include at least two electrode terminals 214, where the at least two electrode terminals 214 may include at least one positive electrode terminal 214a and at least one negative electrode terminal 214b, the positive electrode terminal 214a is configured to be electrically connected to a positive electrode tab of the electrode assembly 22, and the negative electrode terminal 214b is configured to be electrically connected to a negative electrode tab of the electrode assembly 22. The positive electrode terminal 214a and the positive electrode tab may be directly connected or indirectly connected, and the negative electrode terminal 214b and the negative electrode tab may be directly connected or indirectly connected. For example, the positive electrode terminal 214a may be electrically connected to the positive electrode tab through a connecting member 23, and the negative electrode terminal 214b may be electrically connected to the negative electrode tab through a connecting member 23.

It should be understood that different electrode terminals 214 may be located on a same wall or different walls of the battery cell 20. For example, in this embodiment of this application, taking the battery cell 20 including two electrode terminals 214 as an example, as shown in FIG. 3 to FIG. 5, the two electrode terminals 214 may be located on a same wall as an example, and for another example, as shown in FIG. 6 to FIG. 8, the two electrode terminals 214 may also be located on different walls.

The following will be described in detail with reference to the accompanying drawings, taking a cylindrical battery cell 20 as an example, and taking the electrode terminal 214 provided with the electrolyte injection hole 215 as an example, but the embodiments of this application are not limited thereto.

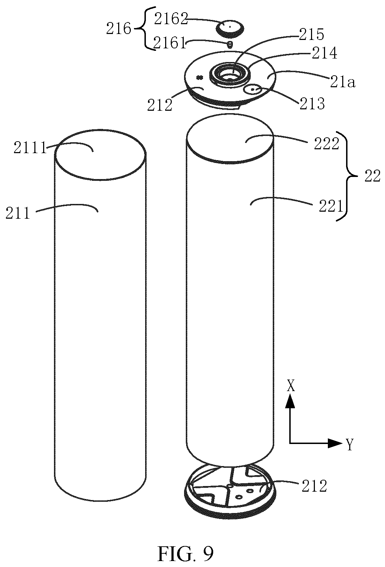

FIG. 9 is a schematic partial exploded structural diagram of a battery cell 20 according to an embodiment of this application. For example, the battery cell 20 shown in FIG. 9 may be a schematic partial exploded structural diagram of the battery cell 20 shown in FIG. 8. As shown in FIG. 9, the battery cell 20 in this embodiment of this application includes: a housing 211, where the housing 211 is a hollow structure with an opening; and a cover plate 212 configured to cover the opening of the housing 211. The hollow structure inside the housing 211 can be used to accommodate an electrode assembly 22, and by covering the opening 2111 of the housing 211 with the cover plate 212, the interior of the battery cell 20 can be isolated from the exterior, avoiding external influences.

The housing 211 in this embodiment of this application may be a hollow structure including at least one opening 2111, where the hollow structure can be used to accommodate the electrode assembly 22 of the battery cell 20, and the cover plate 212 is configured to cover the opening 2111 of the housing 211. Specifically, if the housing 211 is a hollow structure with one opening 2111, one cover plate 212 may be provided to cover the one opening 2111 of the housing 211. If the housing 211 is a hollow structure with two openings 2111, for example, as shown in FIG. 9, the housing 211 has two openings 2111 arranged opposite to each other, two cover plates 212 may be provided, where the two cover plates 212 respectively cover the two openings 2111 of the housing 211.

A material of the housing 211 may be various, such as copper, iron, aluminum, steel, or aluminum alloy. The housing 211 may have various shapes, such as a cylinder, or a cuboid. For example, in FIG. 9 of the embodiments of this application, the housing 211 is a cylinder. For example, the housing 211 has two openings 2111, where the two openings 2111 are two opposite bottom surfaces of the housing 211. This structure with openings at two ends facilitates the assembly of the internal electrode assembly 22, where the electrode assembly 22 can enter the housing 211 through any one of the openings 2111, thereby improving the processing efficiency of the battery cell 20.

The cover plate 212 in this embodiment of this application is configured to cover the opening 2111 of the housing 211 to isolate an internal environment of the battery cell 20 from an external environment. The cover plate 212 may also be made of various materials, such as copper, iron, aluminum, steel, or aluminum alloy. The cover plate 212 and the housing body 211 may be made of same or different materials.

It should be understood that a shape of the cover plate 212 may be adapted to a shape of the housing 211. For example, when the housing 211 is a cuboid structure, the cover plate 212 may be a plate-shaped structure adapted to the housing 211, or may be a hollow cuboid structure with an opening at one end, so that the cover plate 212 and the housing 211 form a cuboid battery cell 20 after fitting. For another example, as shown in FIG. 9, when the housing 211 is a cylinder, the cover plate 212 may also be a circular plate-shaped structure. Alternatively, the cover plate 212 may be a groove structure with a circular bottom wall, so that the cover plate 212 and the housing 211 form a cylindrical battery cell 20 after fitting. The embodiments of this application are not limited thereto.

The battery cell 20 in this embodiment of this application may further include an electrode assembly 22, where one or more electrode assemblies 22 may be provided, and the embodiments of this application are not limited thereto. The electrode assembly 22 is a component in the battery cell 20 where an electrochemical reaction occurs. The electrode assembly 22 may be a cylinder, a cuboid, or the like, and a shape of the electrode assembly 22 may be the same as or different from an external shape of the battery cell 20. For example, if the electrode assembly 22 is a cylindrical structure, the shell of the battery cell 20 may also be a cylindrical structure. Alternatively, if the electrode assembly 22 is a cuboid structure, the shell of the battery cell 20 may also be a cuboid structure to improve a space occupancy rate of the electrode assembly 22 within the battery cell.

As shown in FIG. 9, the electrode assembly 22 in this embodiment of this application may include a tab 222 and a main body portion 221, where the tab 222 of the electrode assembly 22 may include a positive electrode tab and a negative electrode tab. The positive electrode tab may be formed by a portion of a positive electrode plate not coated with a positive electrode active material layer, the negative electrode tab may be formed by a portion of a negative electrode plate not coated with a negative electrode active material layer, and the main body portion 221 is a portion of the electrode assembly 22 where active ions (such as lithium ions) intercalate and deintercalate back and forth between the positive electrode plate and the positive electrode plate. Furthermore, two tabs 222 of the electrode assembly 22 may be located on a same end surface or different end surfaces of the electrode assembly 22. For example, as shown in FIG. 9, this embodiment of this application takes the two tabs 222 of the electrode assembly 22 respectively located on two oppositely arranged end surfaces as an example. Correspondingly, a plurality of electrode terminals 214 of the battery cell 20 may be respectively provided on two opposite end surfaces, for example, may be respectively provided on two cover plates 212. That is, any one of the two cover plates 212 may be the first wall 21a in this embodiment of this application, so that each tab 222 can be electrically connected to one or more electrode corresponding terminals 214. For example, as shown in FIG. 9, each tab 222 may be electrically connected to one corresponding electrode terminal 214, but the embodiments of this application are not limited thereto.

In this embodiment of this application, the cover plate 212 is provided with an electrolyte injection hole 215 to facilitate processing, especially for a cylindrical battery cell 20. As compared with the electrolyte injection hole 215 being located on a cylindrical surface, when the electrolyte injection hole 215 is located on the cover plate 212, the electrolyte injection hole 215 is easier to process, and it is convenient for the electrolyte to quickly infiltrate the electrode assembly 22 during electrolyte injection. For example, the electrolyte injection hole 215 may be a through hole penetrating the cover plate 212. Alternatively, the cover plate 212 is provided with an electrode terminal 214, and the electrolyte injection hole 215 penetrates the electrode terminal 214. The embodiments of this application are not limited thereto.

In some embodiments, the cover plate 212 may also be provided with other components. For example, as shown in FIG. 9, the cover plate 212 may also be provided with a pressure relief mechanism 213, so that when an internal pressure or temperature of the battery cell 20 reaches a predetermined threshold, the pressure relief mechanism 213 is actuated, thereby releasing the internal pressure or temperature of the battery cell 20.

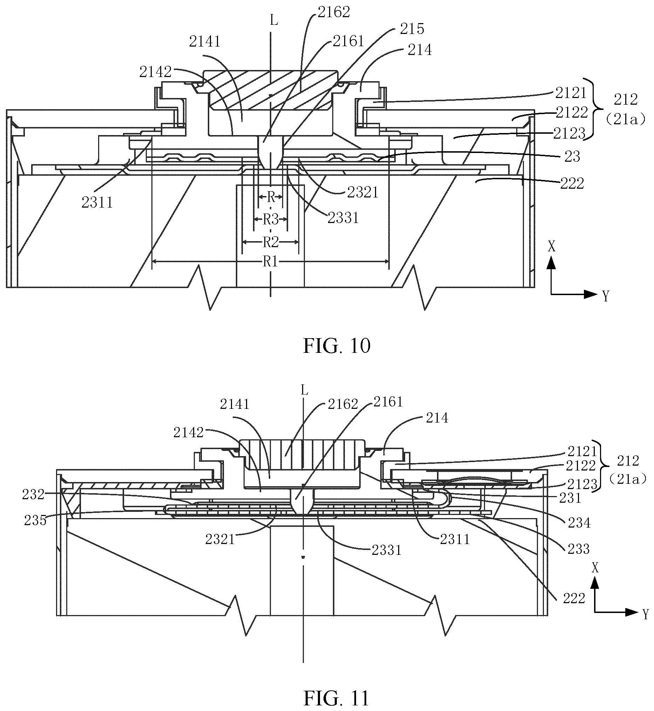

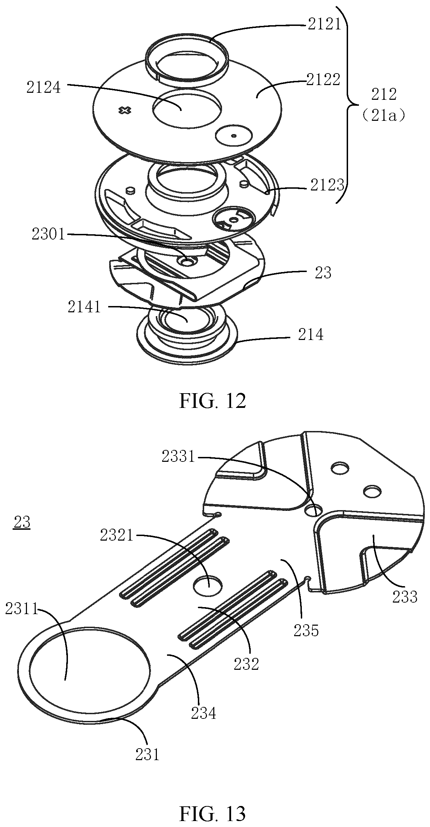

FIG. 10 and FIG. 11 are schematic partial cross-sectional views in two different directions of a battery cell 20 according to an embodiment of this application. For example, FIG. 10 and FIG. 11 may be partial cross-sectional views in two different directions of the battery cell 20 shown in FIG. 9. FIG. 10 may alternatively be a schematic partial cross-sectional view in an A-A' direction shown in FIG. 8. FIG. 11 may alternatively be a schematic partial cross-sectional view in a B-B' direction shown in FIG. 8. FIG. 12 is a schematic exploded structural diagram of a connecting member 23, an electrode terminal 214, and a cover plate 212 where the electrode terminal 214 is located according to an embodiment of this application. For example, FIG. 12 may be a schematic exploded structural diagram of a partial structure of the battery cell 20 shown in FIG. 10 and FIG. 11.

As shown in FIG. 10 to FIG. 12, the electrode terminal 214 is provided with a recess 2141, and the electrolyte injection hole 215 penetrates a bottom wall 2142 of the recess 2141. Providing the recess 2141 on the electrode terminal 214 can reduce a weight of the electrode terminal 214 and improve structural stability between the electrode terminal 214 and the first wall 21a where it is located. Additionally, providing the electrolyte injection hole 215 on the bottom wall 2142 of the recess 2141 facilitates the processing of the electrolyte injection hole 215.

As shown in FIG. 10 to FIG. 12, the battery cell 20 may further include a sealing assembly 216. Specifically, the sealing assembly 216 may include a sealing nail 2161 and a sealing structure 2162. The sealing nail 2161 may be provided on the bottom wall 2142 of the recess 2141 to seal the electrolyte injection hole 215 of the bottom wall 2142 of the recess 2141. The sealing structure 2162 may be configured to seal an opening of the recess 2141, thereby further sealing the electrolyte injection hole 215. In some embodiments, a side of the sealing structure 2162 away from the electrolyte injection hole 215 may also be configured to be electrically connected to a busbar component, so that the battery cell 20 is electrically connected to the busbar component.

As shown in FIG. 10 to FIG. 12, the electrode terminal 214 being provided on the cover plate 212 is used as an example, that is, the first wall 21a serving as the cover plate 212 is used as an example. The cover plate 212 may include a top cover sheet 2122, where the top cover sheet 2122 is provided with an electrode lead-out hole 2124, so that the electrode terminal 214 passes through the electrode lead-out hole 2124 and is provided on the cover plate 212. A first insulating structure 2121 is also provided between the electrode terminal 214 and the top cover sheet 2122 to electrically insulate the electrode terminal 214 from the top cover sheet 2122. A side of the top cover sheet 2122 facing the electrode assembly 22 may also be provided with a second insulating structure 2123, where on one hand, the second insulating structure 2123 can electrically insulate the electrode terminal 214 from the top cover sheet 2122, and on the other hand, the second insulating structure 2123 can also be configured to support the top cover sheet 2122 to improve structural stability of the cover plate 212.

As shown in FIG. 10 to FIG. 12, the battery cell 20 in this embodiment of this application further includes: a connecting member 23 configured to be electrically connected to the electrode terminal 214 and a tab 222 of an electrode assembly 22, respectively. The connecting member 23 is provided with a first through hole 2301, where an orthographic projection of the first through hole 2301 along the first direction X at least partially overlaps with an orthographic projection of the electrolyte injection hole 215 along the first direction X. In this way, an electrolyte can sequentially pass through the electrolyte injection hole 215 of the electrode terminal 214 and the first through hole 2301 provided in the connecting member 23 to enter an interior of the battery cell 20. Furthermore, when the orthographic projection of the first through hole 2301 along the first direction X at least partially overlaps with the orthographic projection of the electrolyte injection hole 215 along the first direction X, in the electrolyte passing through the electrolyte injection hole 215, at least a portion of the electrolyte can directly and quickly enter the interior of the battery cell 20 through the first through hole 2301, avoiding excessive electrolyte flowing to other positions of the connecting member 23, which is more conducive to the electrolyte quickly passing through the electrolyte injection hole 215 and the first through hole 2301, thereby increasing an electrolyte injection speed.

In this embodiment of this application, during assembly of the battery cell 20, a connection between the electrode assembly 22 and the electrode terminal 214 on the first wall 21a is generally indirectly connected through the connecting member 23, that is, the connecting member 23 needs to be electrically connected to the electrode assembly 22 and the electrode terminal 214, respectively. Specifically, the connecting member 23 may be configured to achieve a connection between the tab 222 of the electrode assembly 22 and the electrode terminal 214. For example, the battery cell 20 may include a positive electrode terminal 214a and a negative electrode terminal 214b, where the positive electrode terminal 214a is electrically connected to a positive electrode tab through one connecting member 23, and the negative electrode terminal 214b is electrically connected to a negative electrode tab through one connecting member 23, and the embodiments of this application are not limited thereto.

In some embodiments, an orthographic projection of the first through hole 2301 along the first direction X, an orthographic projection of the electrolyte injection hole 215 along the first direction X, and an orthographic projection of the electrode assembly 22 along the first direction X at least partially overlap. In this way, an electrolyte entering the battery cell 20 through the electrolyte injection hole 215 and the first through hole 2301 can directly and quickly come into contact with the electrode assembly 22, increasing the infiltration speed of the electrolyte and improving electrolyte injection efficiency.

In some embodiments, as shown in FIG. 10 to FIG. 12, a central axis of the first through hole 2301 overlaps with a central axis L of the electrolyte injection hole 215. In this way, no offset occurs between the central axis L of the electrolyte injection hole 215 and the central axis of the first through hole 2301 along the first direction X, allowing the electrolyte to pass through the electrolyte injection hole 215 and the first through hole 2301 more quickly into the interior of the battery cell 20, avoiding excessive electrolyte flowing to other positions, and further increasing the electrolyte injection speed.

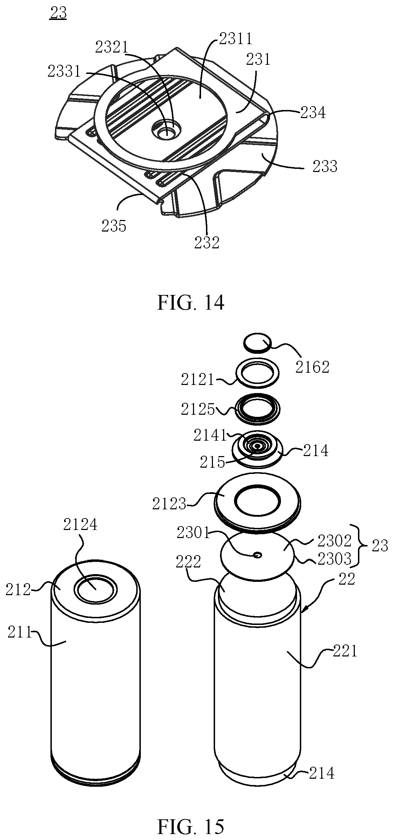

It should be understood that a specific structure of the connecting member 23 in this embodiment of this application can be flexibly configured according to actual applications. For example, FIG. 13 and FIG. 14 are schematic structural diagrams of the connecting member 23 according to an embodiment of this application. For example, the connecting member 23 shown in FIG. 13 and FIG. 14 may be the connecting member 23 shown in FIG. 12, where FIG. 13 is a schematic unfolded structural diagram of the connecting member 23, and FIG. 14 is a schematic structural diagram of a bent connecting member 23.

As shown in FIG. 10 to FIG. 14, the connecting member 23 in this embodiment of this application includes a first portion 231, a second portion 232, and a third portion 233 stacked along the first direction X, where the first portion 231 and the second portion 232 are connected by a first bent portion 234, the second portion 232 and the third portion 233 are connected by a second bent portion 235, the first portion 231 is electrically connected to the electrode terminal 214, and the third portion 233 is electrically connected to the tab 222. Configuring the connecting member 23 as a foldable structure allows the connecting member 23 to have a larger surface area in an unfolded state as shown in FIG. 13 and allows the connecting member 23 to occupy a smaller area in a folded state as shown in FIG. 14. In this way, during the assembly of the battery cell 20, the first portion 231 can first be electrically connected to the electrode terminal 214 provided on the cover plate 212 while the connecting member 23 is unfolded, then the third portion 233 can be electrically connected to the tab 222, and finally, the connecting member 23 can be folded to complete the assembly. Since the surface area of the connecting member 23 is larger when unfolded, when the third portion 233 is electrically connected to the tab 222, the first portion 231 is farther from the third portion 233, so that the electrode terminal 214 and the cover plate 212 are not likely affected. Additionally, folding the connecting member 23 can reduce the space occupied by the connecting member 23 inside the battery cell 20.

In some embodiments, as shown in FIG. 10 to FIG. 14, the first bent portion 234 and the second bent portion 235 are respectively located at opposite ends of the second portion 232, so that, for the unfolded connecting member 23, the first portion 231, the first bent portion 234, the second portion 232, the second bent portion 235, and the third portion 233 are sequentially distributed along a length direction of the connecting member 23, which can increase a length of the connecting member 23. When the third portion 233 is electrically connected to the tab 222, a distance between the first portion 231 and the third portion 233 is relatively large, for example, at least the second portion 232 exists between the first portion 231 and the third portion 233, making the electrode terminal 214 and the cover plate 212 farther apart and less likely to be affected. Additionally, folding the connecting member 23 can also reduce the space occupied by the connecting member 23 inside the battery cell 20.

As shown in FIG. 10 to FIG. 14, the first through hole 2301 penetrates the first portion 231 and the second portion 232, which can reduce obstruction of the first portion 231 and the second portion 232 to an electrolyte, increasing the speed of the electrolyte flowing into an interior of the battery cell 20 and infiltrating the electrode assembly 22.

For example, as shown in FIG. 10 to FIG. 14, the first portion 231 includes a first hole 2311, the second portion 232 includes a second hole 2321, the first through hole 2301 includes the first hole 2311 and the second hole 2321, and an aperture R1 of the first hole 2311 and an aperture R2 of the second hole 2321 are both larger than an aperture R of the electrolyte injection hole 215. In this embodiment of this application, the first through hole 2301 penetrates the first portion 231 and the second portion 232, that is, the first through hole 2301 includes the first hole 2311 and the second hole 2321. With the aperture R1 of the first hole 2311 and the aperture R2 of the second hole 2321 configured to be larger than the aperture R of the electrolyte injection hole 215, obstruction of the first hole 2311 and the second hole 2321 to an electrolyte flowing through the electrolyte injection hole 215 can be reduced, thereby increasing the speed of the electrolyte flowing into an interior of the battery cell 20 and infiltrating the electrode assembly 22.

As shown in FIG. 10 to FIG. 14, the first through hole 2301 also penetrates the third portion 233, that is, the first through hole 2301 may sequentially penetrate the first portion 231, the second portion 232, and the third portion 233. When the first through hole 2301 penetrates the first portion 231, the second portion 232, and the third portion 233, the electrolyte flowing into the battery cell 20 through the electrolyte injection hole 215 can quickly reach the electrode assembly 22 through the first through hole 2301, thereby increasing the infiltration speed and improving infiltration efficiency.

For example, as shown in FIG. 10 to FIG. 14, the third portion 233 includes a third hole 2331, the first through hole 2301 includes the third hole 2331, and an aperture R3 of the third hole 2331 is larger than the aperture R of the electrolyte injection hole 215. Specifically, the third portion 233 may be provided with the third hole 2331. The first through hole 2301 penetrates the first portion 231, the second portion 232, and the third portion 233, that is, the first through hole 2301 includes the first hole 2311, the second hole 2321, and the third hole 2331. With the aperture R3 of the third hole 2331 configured to be larger than the aperture R of the electrolyte injection hole 215, obstruction of the third hole 2331 to an electrolyte can be reduced, thereby increasing the speed of the electrolyte flowing into an interior of the battery cell 20 and infiltrating the electrode assembly 22.

It should be understood that specific values of the aperture R1 of the first hole 2311, the aperture R2 of the second hole 2321, and the aperture R3 of the third hole 2331 can be flexibly configured according to actual applications. For example, the aperture R1 of the first hole 2311, the aperture R2 of the second hole 2321, and the aperture R3 of the third hole 2331 may be configured to decrease sequentially. Specifically, the aperture R1 of the first hole 2311 is typically the largest, for example, so that an electrolyte flowing into the interior of the battery cell 20 through the electrolyte injection hole 215 cannot be obstructed and the first hole 2311 can be accommodated into one end of the electrode terminal 214, thereby achieving an electrical connection between the electrode terminal 214 and the first portion 231. In contrast, the aperture R3 of the third hole 2331 is typically the smallest. For example, the aperture R3 of the third hole 2331 can be configured to be smaller while an electrolyte injection speed requirement of the electrolyte can be met, that is, the electrolyte flowing into the interior of the battery cell 20 through the electrolyte injection hole 215 is not obstructed, so that an area of another region of the third portion 233 used for electrical connection with the tab 222 is larger, thereby improving structural stability of the electrical connection between the third portion 233 and the tab 222.

When the connecting member 23 is folded, a central axis of the first hole 2311, a central axis of the second hole 2321, and a central axis of the third hole 2331 can be aligned to coincide with each other, so that the three holes are aligned. For example, as shown in FIG. 10 to FIG. 14, the aperture R1 of the first hole 2311, the aperture R2 of the second hole 2321, and the aperture R3 of the third hole 2331 decreasing sequentially is used as an example, and when the three holes are aligned, the three holes do not obstruct each other relatively. This ensures that an aperture of the first through hole 2301 can be equal to the aperture of the third hole 2331 with the smallest aperture, thereby meeting an electrolyte injection speed and ensuring electrolyte injection efficiency.

In some embodiments, the connecting member 23 in this embodiment of this application may also have other structures. FIG. 15 is a schematic partial exploded structural diagram of another battery cell 20 according to an embodiment of this application. The main difference between the battery cell 20 shown in FIG. 15 and the battery cell 20 shown in FIG. 9 lies in a structure of the connecting member 23, while identical or similar parts of the battery cell 20 shown in FIG. 15 and the battery cell 20 shown in FIG. 9 are applicable to the relevant description above regarding the battery cell 20 shown in FIG. 9, and for brevity, are not repeated here.

In some embodiments, as shown in FIG. 15, the connecting member 23 includes a first surface 2302 and a second surface 2303 opposite to each other, the first surface 2302 is electrically connected to the electrode terminal 214, the second surface 2303 is electrically connected to the tab 222, and the first through hole 2301 penetrates the first surface 2302 and the second surface 2303, respectively. Specifically, the connecting member 23 may be a sheet-like structure, and the first surface 2302 and the second surface 2303 are respectively upper and lower surfaces oppositely arranged of the sheet-like connecting member 23. The connecting member 23 is both easy to process and can reduce the space occupied by the connecting member 23 inside the battery cell 20, thereby increasing an energy density of the battery cell 20.

It should be understood that the connecting member 23 in this embodiment of this application may also adopt other structures, which are not exemplified one by one here.

In some embodiments, the battery cell 20 shown in FIG. 15 and the battery cell 20 shown in FIG. 9 may also have other differences. For example, as shown in FIG. 15, the battery cell 20 may further include a sealing ring 2125, where the sealing ring may be configured for sealing between the electrode terminal 214 and the electrode lead-out hole 2124. For example, a portion of the sealing ring 2125 may extend into the electrode lead-out hole 2124 to separate a hole wall of the electrode lead-out hole 2124 from the electrode terminal 214, and the embodiments of this application are not limited thereto.

In this embodiment of this application, the battery cell 20 is provided with the electrolyte injection hole 215, where the center of the orthographic projection of the battery cell 20 along the first direction X overlaps with the center of an orthographic projection of the electrolyte injection hole 215 along the first direction X, and the first direction X is a direction of the central axis L of the electrolyte injection hole 215. In this way, in processing the battery cell 20, even if the battery cell 20 rotates and the rotation angle is uncertain, when an electrolyte is injected into the battery cell 20 through the electrolyte injection hole 215, the position of the electrolyte injection hole 215 of each battery cell 20 can still be ensured to be relatively fixed, eliminating the need to align by rotating the battery cell 20. This can improve electrolyte injection efficiency, enhance the processing efficiency of the battery cell 20, reduce the proportion of electrolyte contamination, and further improve the processing yield of the battery cell 20.

Although this application has been described with reference to preferred embodiments, various improvements can be made thereto and components therein can be replaced with equivalents without departing from the scope of this application. In particular, as long as there is no structural conflict, various technical features mentioned in the various embodiments can be combined in any manner. This application is not limited to the specific embodiments disclosed in this specification but includes all technical solutions falling within the scope of the claims.

## Claims

1. A battery cell, wherein the battery cell is provided with an electrolyte injection hole (215), a center of an orthographic projection of the battery cell along a first direction overlaps with a center of an orthographic projection of the electrolyte injection hole (215) along the first direction, and the first direction is a direction of a central axis of the electrolyte injection hole (215).

2. The battery cell according to claim 1, wherein the electrolyte injection hole (215) is provided on a first wall (21a) of the battery cell, and the electrolyte injection hole (215) is located at a center of the first wall (21a).

3. The battery cell according to claim 1, wherein the battery cell further comprises:
an electrode terminal (214) provided on the first wall (21a), wherein the electrolyte injection hole (215) penetrates the electrode terminal (214), and a central axis of the electrode terminal (214) coincides with the central axis of the electrolyte injection hole (215).

4. The battery cell according to claim 3, wherein the electrode terminal (214) is provided with a recess (2141), and the electrolyte injection hole (215) penetrates a bottom wall (2142) of the recess (2141).

5. The battery cell according to claim 3 or 4, wherein the battery cell further comprises:
a connecting member (23) configured to be electrically connected to both the electrode terminal (214) and a tab (222) of an electrode assembly (22), wherein the connecting member (23) is provided with a first through hole (2301), and an orthographic projection of the first through hole (2301) along the first direction at least partially overlaps with the orthographic projection of the electrolyte injection hole (215) along the first direction.

6. The battery cell according to claim 5, wherein the orthographic projection of the first through hole (2301) along the first direction, the orthographic projection of the electrolyte injection hole (215) along the first direction, and an orthographic projection of the electrode assembly (22) along the first direction at least partially overlap.

7. The battery cell according to claim 5 or 6, wherein a central axis of the first through hole (2301) overlaps with the central axis of the electrolyte injection hole (215).

8. The battery cell according to any one of claims 5 to 7, wherein the connecting member (23) comprises a first surface (2302) and a second surface (2303) opposite to each other, the first surface (2302) is electrically connected to the electrode terminal (214), the second surface (2303) is electrically connected to the tab (222), and the first through hole (2301) penetrates both the first surface (2302) and the second surface (2303).

9. The battery cell according to any one of claims 5 to 7, wherein the connecting member (23) comprises a first portion (231), a second portion (232), and a third portion (233) stacked along the first direction, the first portion (231) and the second portion (232) are connected by a first bent portion (234), the second portion (232) and the third portion (233) are connected by a second bent portion (235), the first portion (231) is electrically connected to the electrode terminal (214), and the third portion (233) is electrically connected to the tab (222).

10. The battery cell according to claim 9, wherein the first bent portion (234) and the second bent portion (235) are respectively located at opposite ends of the second portion (232).

11. The battery cell according to claim 9 or 10, wherein the first through hole (2301) penetrates the first portion (231) and the second portion (232).

12. The battery cell according to claim **11,** wherein the first portion (231) comprises a first hole (2311), the second portion (232) comprises a second hole (2321), the first through hole (2301) comprises the first hole (2311) and the second hole (2321), and an aperture of the first hole (2311) and an aperture of the second hole (2321) are both larger than an aperture of the electrolyte injection hole (215).

13. The battery cell according to claim 11 or 12, wherein the first through hole (2301) also penetrates the third portion (233).

14. The battery cell according to claim 13, wherein the third portion (233) comprises a third hole (2331), the first through hole (2301) comprises the third hole (2331), and an aperture of the third hole (2331) is larger than an aperture of the electrolyte injection hole (215).

15. The battery cell according to any one of claims 1 to 14, wherein the battery cell comprises:
a housing (211), wherein the housing (211) is a hollow structure with an opening; and
a cover plate (212) configured to cover the opening of the housing (211).

16. The battery cell according to claim 15, wherein the cover plate (212) is provided with the electrolyte injection hole (215).

17. The battery cell according to any one of claims 1 to 16, wherein a wall at which the electrolyte injection hole (215) is located is circular or rectangular.

18. A battery comprising:
the battery cell according to any one of claims 1 to 17.

19. An electric device comprising:
the battery cell according to any one of claims 1 to 17, wherein the battery cell is configured to provide electric energy for the electric device.
